# EUROPÄISCHE PATENTSCHRIFT

(11) **EP 2 117 755 B1**
(45) Veröffentlichungstag und Bekanntmachung des Hinweises auf die Patenterteilung: **14.03.2018**
(21) Anmeldenummer: 08700854.6
(22) Anmeldetag: 08.01.2008
(51) Int. Cl.: B23K 1/00, B23K 1/005, B23K 3/06, G02B 7/00

(54) **VERFAHREN ZUM FÜGEN JUSTIERTER DISKRETER OPTISCHER ELEMENTE**
METHOD FOR JOINING ALIGNED DISCRETE OPTICAL ELEMENTS
PROCÉDÉ POUR JOINDRE DES ÉLÉMENTS OPTIQUES DISCRETS AJUSTÉS

(30) Priorität: 09.01.2007 DE 102007002436
(43) Veröffentlichungstag der Anmeldung: 18.11.2009
(73) Patentinhaber: Fraunhofer-Gesellschaft zur Förderung der angewandten Forschung e.V., 80686 München (DE); Pactech Packaging Technologies Gmbh, 14641 Nauen (DE)
(72) Erfinder: BECKERT, Erik, 99310 Arnstadt (DE); BANSE, Henrik, 07743 Jena (DE); ZAKEL, Elke, Dr., 14641 Nauen (DE); FETTKE, Matthias, 10178 Berlin (DE)
(74) Vertreter: Pfenning, Meinig & Partner mbB
(86) Internationale Anmeldenummer: PCT/DE2008/000038
(87) Internationale Veröffentlichungsnummer: WO 2008/083676

(56) Entgegenhaltungen:
- WO-A-2005/111687
- DE-A1- 10 240 355
- US-A- 3 648 915
- US-A- 5 478 005
- US-A1- 2004 104 460
- US-A1- 2006 219 760
- US-A1- 2006 237 514
- DATABASE INSPEC [Online] THE INSTITUTION OF ELECTRICAL ENGINEERS, STEVENAGE, GB; Februar 2003 (2003-02), GORSKI M ET AL: "Jet vapor deposition for Au/Sn solder applications" XP002477743 Database accession no. 7660599 -& Advanced Packaging PennWell Publishing USA, Bd. 12, Nr. 2, Februar 2003 (2003-02), Seiten 31-34, XP002477742 ISSN: 1065-0555

## Beschreibung

Die Erfindung betrifft ein Verfahren zum Fügen justierter diskreter optischer Elemente. Unterschiedlichste Geräte mit optischen Komponenten werden zunehmend mit kleineren Abmessungen gewünscht und dementsprechend auch zur Verfügung gestellt. Dabei haben u.a. auch die entsprechend vorhandenen optischen Elemente eine sehr kleine Dimensionierung, müssen aber trotzdem hochpräzise positioniert und dann in der gewünschten exakten Position fixiert werden. Die Befestigung solcher optischen Elemente muss dabei langzeit-, temperatur- und strahlungsstabil gestaltet sein, um die Funktion des gesamten optischen Systems dauerhaft zu gewährleisten. Außerdem muss berücksichtigt werden, dass die meisten einsetzbaren optischen Elemente zumindest teilweise aus optisch transparenten Werkstoffen hergestellt sind, die jedoch bezüglich ihrer thermischen und mechanischen Eigenschaften kritisch sind.

Für die in Rede stehenden Anwendungen werden zum Fügen und Montieren überwiegend Klemmverbindungen oder auch Klebverbindungen eingesetzt. Bei klemmenden Verfahren lassen sich mechanische Spannungen nicht vermeiden, die sich aber insbesondere auf sehr kleine optische Elemente negativ auswirken und zum anderen Probleme dadurch entstehen, dass in Folge der kleinen Dimensionierung Klemmverbindungen nur sehr schwer zu realisieren sind.

Am häufigsten wird aber das Kleben als Fügeverfahren für die in Rede stehenden optischen Elemente eingesetzt. Dabei weisen die herkömmlichen Klebstoffe aber nur begrenzte Temperatur- und Langzeitstabilitäten auf, können ausgasen, neigen zur Degradation unter Strahlenbelastung (z.B. UV) und auch ein Schrumpfen beim Aushärten lässt sich nicht vermeiden. Außerdem ist das Aushärten eines Klebstoffs ein zeitaufwändiger Prozess, währenddessen die exakte Positionierung und Fixierung des jeweiligen noch nicht vollständig stoffschlüssig verbundenen optischen Elementes aufrechterhalten werden muss.

Eine weitere Möglichkeit zur stoffschlüssigen Verbindung von unterschiedlichsten Bauteilen ist das Löten. Dieses Verbindungsverfahren wird aber bei optischen Elementen bisher nicht ohne weiteres eingesetzt, obwohl Lote als Fügemedium in einigen Fällen besser geeignet sind, als die herkömmlich eingesetzten Klebstoffe. Dabei wirkt sich insbesondere das geringe Kriechvermögen von Loten im Vergleich zu Klebstoffen aus, so dass dieser Nachteil durch ein Flussmittel zumindest in seiner Wirkung reduziert werden muss.

Durch Flussmittel treten aber wieder andere Nachteile, wie Entgasungseffekte oder ein Flussmittelrückstand in der stoffschlüssig hergestellten Lötverbindung auf. Bei einer herkömmlichen Herstellung von Lötverbindungen kommt es außerdem häufig zu einer ungleichmäßigen Verteilung eines Lotes über die jeweiligen miteinander zu verbindenden Flächen, so dass innerhalb eines Fügespaltes eine inhomogene Verteilung des Lotes zu verzeichnen ist. Dies kann durch Ausübung von Druckkräften teilweise kompensiert werden, mit denen die miteinander zu fügenden Teile oder Elemente zusammengepresst werden. Insbesondere bei optischen Elementen und ganz besonders bei miniaturisierten optischen Elementen kann dies aber häufig nicht durchgeführt werden, ohne dass es zu einer Beschädigung oder gar Fehlpositionierung kommen kann. Das Lot muss außerdem länger flüssig gehalten werden, wofür zusätzliche thermische Energie erforderlich ist.

Die von Gorski M. et al. veröffentlichte Schrift "Jet vapor deposition for Au/Sn solder applications" (DA-TABASE INSPEC [Online] THE INSTITUTION OF ELECTRICAL ENGINEERS; STEVENAGE; GB Februar 2003) lehrt ein Verfahren, bei dem unter niedrigen Vakuumbedingungen verdampftes Lot mit einem Trägergas durch eine Düse appliziert werden soll.

US 2004/104460 A1 beschreibt mehrere Möglichkeiten zum Auftragen von Lot, beispielsweise durch Aufsprühen eines Metallpulvers mit einem Gasstrom oder via Inkjet-Technik.

DE 102 40 355 A1 lehrt ein Verfahren zur Herstellung einer flussmittelfreien Lötverbindung von Körpern, wobei auf komplementären Oberflächen dieser Körper jeweils ein Dünnschichtsystem aufgebracht ist.
Weiterhin ist aus US 5 478 005 A eine Vorrichtung zum flussmittelfreien Löten von Werkstücken bekannt.
Die WO 2005/111687 A1 offenbart eine Halterung für optische Elemente und ein Verfahren zur Herstellung eines optischen Systems mit einer solchen Halterung.

Aus US 2006/0219760 A1 (Figur 10, Absätze 8-12) und US 2006/0237514 A1 sind jeweils eine Vorrichtung zur Applikation von Lötkugeln bekannt, wobei die Lötkugeln vor dem Austreten aus einer Düse mit einem Laser geschmolzen werden.
US 3,648,915 B betrifft eine Anordnung zum Löten von Halbleiterelementverbindungen.
Es ist daher Aufgabe der Erfindung, ein Verfahren vorzuschlagen, mit dem optische Elemente im justierten Zustand gefügt werden können, wobei eine thermische und langzeitstabile Verbindung mit geringem Aufwand und hoher Positioniergenauigkeit hergestellt werden kann.
Erfindungsgemäß wird diese Aufgabe mit einem Verfahren, das die Merkmale des Anspruchs 1 aufweist, gelöst. Vorteilhafte Ausgestaltungsformen und Weiterbildungen der Erfindung können mit in untergeordneten Ansprüchen bezeichneten Merkmalen erreicht werden.
Bei der Erfindung wird so vorgegangen, dass an optischen Elementen zu fügende Oberflächenbereiche mit mindestens einer metallischen Dünnschicht versehen werden. Durch solche metallischen Dünnschichten kann das Benetzungsverhalten für einsetzbare Lote deutlich verbessert werden. Dabei kann es sich um eine einzige metallische Dünnschicht auf der zu fügenden Oberfläche eines optischen Elementes aber auch um mehrere übereinander auf der Oberfläche ausgebildete metallische Schichten handeln.

Zum Fügen wird dann flüssiges Lot berührungslos und in dosierter Form auf die vorab metallisierte Oberfläche appliziert. Dabei wird das flussmittelfreie Lot über eine Düse mit einem unter Druck stehenden Gasstrom auf die zu fügende Oberfläche berührungslos appliziert. Das Lot legt dabei "freifliegend" einen kurzen Weg vom Düsenaustritt bis zur zu fügenden Oberfläche zurück.

Das Lot kann auf einen für das Fügen vorgesehenen Oberflächenbereich appliziert werden. Es kann aber auch in erfindungsgemäßer Form in einen Fügespalt hinein appliziert werden, der zwischen dem zu fügenden optischen Element und einem weiteren Bauteil oder einer weiteren Komponente, mit der das jeweilige optische Element dauerhaft verbunden werden soll, ausgebildet ist.

Für die Ausbildung metallischer Dünnschichten können bevorzugt Titan, Chrom, Gold, Wolfram und/oder Platin sowie auch Legierungen dieser Metalle eingesetzt werden. Für die Herstellung der metallischen Dünnschichten können die üblicherweise eingesetzten Vakuumbeschichtungsverfahren in PVD- oder auch CVD-Technik genutzt werden. Mit Hilfe von bei diesen Verfahren zur Herstellung metallischer Dünnschichten verwendeten bekannten Mitteln können die metallischen Dünnschichten hochpräzise hergestellt werden, wobei dies auf die jeweiligen Positionen, Dimensionierungen, geometrischen Gestaltungen und auch die jeweiligen Schichtdicken zutrifft. Die Metallisierung korrespondierender Fügeflächen auf Substraten oder in Halterungen kann als metallische Dünnschicht oder metallische Dickschicht mittels üblicher Drucktechnologien ausgebildet werden.

Bilden mehrere metallische Dünnschichten ein solches Schichtsystem, kann die oberste Schicht, auf der das Lot dann appliziert werden soll insbesondere unter Berücksichtigung des jeweilig eingesetzten Lotes ausgewählt werden. Für diese oberste metallische Dünnschicht kann bevorzugt Gold eingesetzt werden.

Als geeignete Lote können bevorzugt eutektische Legierungen eingesetzt werden, um insbesondere einen negativen thermischen Einfluss auf die Werkstoffe, aus denen die jeweiligen optischen Elemente gebildet sind, zu vermeiden. Solche eutektischen Lote können beispielsweise Gold-Zinn-, Silber-Zinn- oder Wismut-Zinn-Legierungen sein, deren Schmelztemperatur auch deutlich unterhalb von 300 °C liegen kann.

Das Aufschmelzen des eingesetzten Lotes unmittelbar vor der eigentlichen Applikation kann bevorzugt mit Laserstrahlung erreicht werden. Das geschmolzene Lot erfolgt dann, wie bereits angedeutet, über eine Düse mit einem unter höherem Druck stehenden Gasstrom, der das flüssige Lot dann aus der Düse, die gegebenenfalls in Form einer geeigneten Kanüle ausgebildet sein kann, herausdrückt.

Dabei wird so vorgegangen, dass das jeweils spezifische Lotvolumen aufgeschmolzen und dann flüssig auf den zu fügenden Oberflächenbereich in dosierter Form appliziert wird. Dabei wird ein Lotvolumen im Bereich von 0,005 bis 1,5 mm³ je Fläche mm² eingesetzt. Die Applikation des flüssigen Lotes kann dabei auch in gepulster Form durchgeführt werden, wobei zwischen den einzelnen Pulsen die Position für die jeweilige Applikation von flüssigem Lot auf zu fügenden Oberflächenbereichen verändert werden kann, was zum einen bei großflächigeren zu fügenden Oberflächenbereichen günstig ist und zum anderen auch bei einer Applikation in mehreren voneinander abweichenden Ebenen erfolgen sollte. Für letztgenanntes ist es vorteilhaft, einen Applikator einzusetzen, der zumindest zweidimensional, bevorzugt dreidimensional bewegbar und positionierbar ist. Ganz besonders vorteilhaft sollte er elektronisch gesteuert werden können, um das erfindungsgemäße Verfahren automatisiert durchführen zu können. Die entsprechenden Bewegungen eines Applikators für Lot können aber auch mit Hilfe eines ansonsten herkömmlichen Industrieroboters oder einer ähnlichen Einrichtung durchgeführt werden, der dann wiederum elektronisch gesteuert und automatisch betrieben werden kann.
Bei der Herstellung der stoffschlüssigen Verbindung mit dem eingesetzten Lot kann die Festigkeit der Verbindung verbessert werden, da im Bereich der obersten metallischen Dünnschicht oder einer metallischen Dickschicht und dem Lot intermetallische Phasen oder Mischkristalle gebildet werden können.
Mit der Erfindung können durch das gezielte und dosierte Zuführen von Lot eine Fixierung optischer Elemente mit hoher Präzision und hoher Festigkeit über lange Zeiträume erreicht werden. Die Verbindung ist temperaturstabil und auch gegenüber elektromagnetischer Strahlung resistent. Fügespalte, die z.B. durch Justiervorgänge entstanden sind, können durch das eingesetzte Lotvolumen homogen überbrückt werden. Dies beeinflusst wesentlich die erreichbare Genauigkeit nach dem Fügen optischer Elemente. Kleinere Fügespalte führen auf Grund der geringeren erforderlichen Lotvolumina zu einer höheren Genauigkeit und reduzieren gleichzeitig die Kosten für den Materialaufwand.
Mit dem erfindungsgemäßen Verfahren können sowohl einfache, wie auch komplex gestaltete optische Elemente in flexibler Form an einzelnen Teilen, Komponenten oder auch Subbaugruppen dauerhaft und mit hoher Präzision befestigt werden.

Es wird auf den Einsatz von Flussmitteln verzichtet, um deren Nachteile zu vermeiden. Bei der Durchführung des erfindungsgemäßen Verfahrens können die vorhandenen Fügespalte durch die Möglichkeit einer definierten Dosierung überbrückt werden. Dadurch kann sowohl eine passive (Positionierung gegen Anschlagstrukturen), wie auch eine aktive Justage der zu fügenden Komponenten durchgeführt werden.
Es besteht die Möglichkeit einer extrem flexiblen Applikation des Lotes, so dass auch komplexe und schwer zugängliche Geometrien berücksichtigt werden können. Es ist eine einfache Automatisierung auch in Verbindung mit anderen Montageschritten möglich, die gleichzeitig oder zeitlich versetzt zur Ausbildung der Fügeverbindung durchgeführt werden können.
Die Festigkeit der Fügeverbindung wird unmittelbar nach dem Aushärten des Lotes, also kurz nach dessen Applikation, erreicht, so dass die Nachteile, die üblicherweise bei Klebverbindungen auftreten, vermieden werden können.
Ein zusätzlicher Wärmeeintrag, beispielsweise in Form einer Vorwärmung oder nachträglichen Bestrahlung ist ebenfalls bei der Erfindung nicht erforderlich.
Lotzufuhr, Umschmelzen des Lotes und die Applikation des Lotes in flüssigem Zustand erfolgen unmittelbar am Fügeort, wobei eine gleichmäßige Verteilung des flüssigen Lotes mit Hilfe der Energie des Gasdruckes des eingesetzten Gasstromes ausgenutzt wird. Für den Gasstrom kann besonders vorteilhaft ein inertes Gas eingesetzt werden, das dann wiederum gleichzeitig Schutzgasfunktion erfüllen kann.
Das erfindungsgemäße Verfahren kann für nahezu alle Arten optischer und optoelektronischer Systeme und Elemente eingesetzt werden, bei denen diskrete optische Elemente montiert werden müssen und in denen spezielle Randbedingungen, wie beispielsweise Umweltbedingungen, berücksichtigt werden müssen, die einem Einsatz herkömmlicher Klebstoffe entgegenstehen.
So kann die Erfindung für die Herstellung von Laser- und LED-Beleuchtungsmodulen für die Medizintechnik oder Lithographie, Belichtungsoptiken für Halbleiteroptiken oder auch autoklavierbare Medizinoptiken (Endoskope) und viel anderes mehr eingesetzt werden. Sie ist insbesondere für optische Elemente oder Komponenten mit solchen optischen Elementen geeignet, die auch in Kontakt mit körpereigenem Gewebe treten können dabei biokompatibel sind, um Abwehrreaktionen zu vermeiden.

Nachfolgend soll die Erfindung beispielhaft näher erläutert werden.

An einem optischen Modul soll eine Kollimationslinse in sechs Freiheitsgraden zu einer auf einem Substrat befindlichen Strahlquelle/Laserdiode justiert und fixiert werden, um eine optimale Fasereinkopplung elektromagnetischer Strahlung zu ermöglichen. Am äußeren Umfang der Kollimationslinse sind metallische Dünnschichten mit einem Schichtaufbau Titan/Chrom/Gold und einer Gesamtschichtdicke von 0,5 bis 1 µm ausgebildet.

Dazu wird die am äußeren Umfang metallisierte Kollimationslinse mittels eines speziellen Greifers in einer Kavität des Substrats aktiv auf einen maximalen Einkoppelgrad justiert. Anschließend werden seitlich der Linse auf dem mit metallischen Dünnschichten versehenen Substrat ebenfalls metallisierte Hilfselemente in einem möglichst geringen Abstand zur Kollimationslinse positioniert. Unter Berücksichtigung einer speziellen Lötreihenfolge und der sich daraus ergebenden Fügetoleranzen werden zunächst die Hilfselemente mit dem erfindungsgemäßen Verfahren an mindestens jeweils einer Stelle unter Verwendung von ca. 1,5 mm³ AgSnCu-Lot auf dem Substrat gefügt. Der Anteil an Kupfer im Lot ist dabei sehr klein. Im Anschluss daran wird die Kollimationslinse mit dem erfindungsgemäßen Verfahren an jeweils mindestens einer Position mit ca. 1,5 mm³ AgSnCu-Lot mit jedem Hilfselement verbunden.

Durch den Einsatz einer speziellen Substrathalterung und eines Montageroboters lässt sich der gesamte Fügeprozess im Bereich einiger Sekunden durchführen. Bei Einsatz entsprechender Prozessroutinen zur aktiven Linsenjustage bietet sich gleichzeitig ein hohes Automatisierungspotential.

## Patentansprüche

1. Verfahren zum Fügen justierter diskreter optischer Elemente, bei dem am optischen Element zu fügende Oberflächenbereiche mit mindestens einer metallischen Dünnschicht versehen werden, die anschließend mit einem flüssigen Lot berührungslos dosiert benetzt werden; wobei das flussmittelfreie geschmolzene Lot über eine Düse mit einem unter Druck stehenden Gasstrom als flüssiges Lot aus der Düse auf die zu fügenden Oberflächenbereiche appliziert wird, wobei das Lot mit Hilfe der Energie des Gasdruckes des eingesetzten Gasstromes gleichmäßig über zu fügende Oberflächenbereiche verteilt und flüssig in dosierter Form mit einem Lotvolumen von 0,005 mm³ bis 1,5 mm³ je Fläche mm² appliziert wird.

2. Verfahren nach Anspruch 1, **dadurch gekennzeichnet, dass** das Lot in einen Fügespalt appliziert wird.

3. Verfahren nach einem der vorhergehenden Ansprüche, **dadurch gekennzeichnet, dass** metallische Dünnschichten mit Titan, Chrom, Gold, Wolfram und/oder Platin gebildet werden.

4. Verfahren nach einem der vorhergehenden Ansprüche, **dadurch gekennzeichnet, dass** eine obere metallische Dünnschicht, auf der das Lot appliziert wird, mit Gold gebildet wird.

5. Verfahren nach einem der vorhergehenden Ansprüche, **dadurch gekennzeichnet, dass** als Lot eine eutektische Legierung eingesetzt wird.

6. Verfahren nach einem der vorhergehenden Ansprüche, **dadurch gekennzeichnet, dass** eine Gold-Zinn-, Silber-Zinn- oder Wismut-ZinnLegierung als Lot eingesetzt wird.

7. Verfahren nach einem der vorhergehenden Ansprüche, **dadurch gekennzeichnet, dass** zur Ausbildung des Gasstromes ein inertes Gas eingesetzt wird.

8. Verfahren nach einem der vorhergehenden Ansprüche, **dadurch gekennzeichnet, dass** das Lot mit Laserstrahlung vor seiner Applikation aufgeschmolzen wird.

9. Verfahren nach einem der vorhergehenden Ansprüche, **dadurch gekennzeichnet, dass** mit dem Lot und einer metallischen Dünnschicht oder einer metallischen Dickschicht intermetallische Phasen oder Mischkristalle innerhalb eines Übergangsbereichs gebildet werden.

10. Verfahren nach einem der vorhergehenden Ansprüche, **dadurch gekennzeichnet, dass** die Applikation des Lotes gepulst durchgeführt wird.

11. Verfahren nach Anspruch 10, **dadurch gekennzeichnet, dass** bei der gepulsten Applikation die Position für die Applikation auf dem zu fügenden Oberflächenbereich verändert wird.

12. Verfahren nach einem der vorhergehenden Ansprüche, **dadurch gekennzeichnet, dass** ein Applikator für Lot dreidimensional bewegt und positioniert wird.

13. Verfahren nach Anspruch 12, **dadurch gekennzeichnet, dass** der Applikator elektronisch gesteuert wird.

## Claims

1. A method for joining aligned discrete optical elements, wherein surface regions to be joined at the optical element are provided with at least one thin metal layer and are subsequently wetted with a liquid solder in a contact-free, metered manner; wherein the flux-free molten solder is applied to the surface regions to be joined via a nozzle using a pressurized gas flow, said solder being evenly distributed over surface regions to be joined with the aid of the energy of the gas pressure of the employed gas flow and being applied in a liquid, metered manner with a solder volume of 0.005 mm³ to 1.5 mm³ per area mm².

2. A method in accordance with claim 1, **characterized in that** the solder is applied in a join gap.

3. A method in accordance with one of the preceding claims, **characterized in that** thin metal layers are formed with titanium, chromium, gold, tungsten and/or platinum.

4. A method in accordance with one of the preceding claims, **characterized in that** an upper thin metal layer onto which the solder is applied is formed by gold.

5. A method in accordance with one of the preceding claims, **characterized in that** an eutectic alloy is used as the solder.

6. A method in accordance with one of the preceding claims, **characterized in that** one of a gold-tin alloy, a silver-tin alloy and a bismuth-tin alloy is used as the solder.

7. A method in accordance with one of the preceding claims, **characterized in that** an inert gas is employed for creating the gas flow.

8. A method in accordance with one of the preceding claims, **characterized in that** the solder is melted using laser radiation prior to its application.

9. A method in accordance with one of the preceding claims, **characterized in that** one of intermetallic phases and mixed crystals are formed within a transition region with the solder and one of a thin metal layer and a thick metal layer.

10. A method in accordance with one of the preceding claims, **characterized in that** the solder is applied in a pulsed manner.

11. A method in accordance with claim 10, **characterized in that** the position for the application on the surface region to be joined is changed on the pulsed application.

12. A method in accordance with one of the preceding claims, **characterized in that** an applicator for solder is moved and positioned in three dimensions.

13. A method in accordance with claim 12, **characterized in that** the applicator is electronically controlled.

## Revendications

1. Procédé de jonction d'éléments optiques discrets ajustés, dans lequel, les zones superficielles à joindre à l'élément optique sont munies d'au moins une couche métallique mince, qui est ensuite humectée de manière dosée sans contact avec une brasure liquide ; la brasure fondue exempte de flux étant appliquée par l'intermédiaire d'une buse avec un flux de gaz sous pression sous la forme d'une brasure liquide à partir de la buse vers les zones superficielles à joindre, la brasure étant distribuée, à l'aide de l'énergie de la pression du gaz du flux de gaz utilisé, de manière uniforme sur les zones superficielles à joindre et étant appliquée sous forme liquide de manière dosée avec un volume de brasure de 0,005 mm³ à 1,5 mm³ par surface en mm².

2. Procédé selon la revendication 1, **caractérisé en ce que** la brasure est appliquée dans un interstice de jonction.

3. Procédé selon l'une des revendications précédentes, **caractérisé en ce que** les couches métalliques minces sont constituées de titane, de chrome, d'or, de tungstène et/ou de platine.

4. Procédé selon l'une des revendications précédentes, **caractérisé en ce qu'**une couche métallique mince supérieure, sur laquelle la brasure est appliquée est constituée d'or.

5. Procédé selon l'une des revendications précédentes, **caractérisé en ce que** la brasure utilisée est un alliage eutectique.

6. Procédé selon l'une des revendications précédentes, **caractérisé en ce qu'**un alliage or-étain, argent-étain ou bismuth-étain est utilisé en tant que brasure.

7. Procédé selon l'une des revendications précédentes, **caractérisé en ce que**, pour la formation du flux de gaz, un gaz inerte est utilisé.

8. Procédé selon l'une des revendications précédentes, **caractérisé en ce que** la brasure est fondue à l'aide d'un rayon laser avant son application.

9. Procédé selon l'une des revendications précédentes, **caractérisé en ce que**, avec la brasure ou une couche métallique mince ou une couche métallique épaisse, des phases intermétalliques ou des cristaux mixtes sont formés à l'intérieur d'une zone de transition.

10. Procédé selon l'une des revendications précédentes, **caractérisé en ce que** l'application de la brasure est effectuée de manière pulsée.

11. Procédé selon la revendication 10, **caractérisé en ce que**, lors de l'application pulsée, la position pour l'application sur la zone superficielle à joindre est modifiée.

12. Procédé selon l'une des revendications précédentes, **caractérisé en ce qu'**un applicateur pour la brasure est déplacé et positionné de manière tridimensionnelle.

13. Procédé selon la revendication 12, **caractérisé en ce que** l'applicateur est contrôlé de manière électronique.
